# EUROPÄISCHE PATENTSCHRIFT

(11) **EP 2 242 112 B1**
(45) Veröffentlichungstag und Bekanntmachung des Hinweises auf die Patenterteilung: **27.02.2019**
(21) Anmeldenummer: 09009989.6
(22) Anmeldetag: 03.08.2009
(51) Int. Cl.: H02S 20/23, F24S 80/70, F24S 20/67, F24S 25/35, F24S 10/20, F24S 25/636, F24S 40/44, F24S 25/634, F24S 25/60, F24S 20/00, F24S 25/00

(54) **Dacheindeckungssystem für Solarmodule**
Roof covering system for solar modules
Système de recouvrement de toit pour modules solaires

(30) Priorität: 27.03.2009 DE 202009004150 U
(43) Veröffentlichungstag der Anmeldung: 20.10.2010
(73) Patentinhaber: Beyersdorffer, Mathias, 29160 Crozon (FR)
(72) Erfinder: Beyersdorffer, Mathias, 29160 Crozon (FR)
(74) Vertreter: Heyerhoff Geiger & Partner Patentanwälte PartGmbB

(56) Entgegenhaltungen:
- EP-A1- 2 023 402
- EP-A2- 0 905 795
- DE-A1-102005 039 495
- DE-A1-102007 036 206
- DE-U1- 20 304 676
- DE-U1- 29 604 465
- DE-U1-202007 016 011
- DE-U1-202008 015 916
- JP-A- 2005 213 919
- US-A- 4 621 472

## Beschreibung

Die Erfindung betrifft ein Dacheindeckungssystem zur Befestigung von auf einem Schrägdach geschuppt angeordneten und als Dacheindeckung dienenden Dachmodulen mit einer Anzahl von in Ablaufrichtung ausgerichteten Längsschienen, einer Klemmvorrichtung zur klemmenden Befestigung von rahmenlosen Dachmodulen auf den Längsschienen und senkrecht zu den Längsschienen ausgerichteten Querschienen.
Photovoltaik-Dachmodule, im Folgenden vereinfacht PV-Module genannt, werden bei einer Indach-Konstruktion als Dach eindeckende Elemente verwendet, sodass sie Dachpfannen, Schindeln oder dergleichen ersetzen. Hierbei werden die empfindlichen und dünnen PV-Module jeweils gerahmt, und die Rahmen werden in ein Trägersystem eingefasst, das die PV-Module auf einem Dach befestigt. Die PV-Module können hierbei geschuppt, also wie Dachziegel in Ablaufrichtung teilweise überlappend, angeordnet sein, sodass sie das Dach abdichtende Dachmodule bilden, an denen das Wasser wie bei Dachziegeln von oben nach unten in Ablaufrichtung ablaufen kann.

Aus der DE 20304676 U1 ist ein Dacheindeckungssystem zur Befestigung von auf einem Schrägdach geschuppt angeordneten und als Dacheindeckung dienenden Dachmodulen bekannt, das in Ablaufrichtung ausgerichtete Längsschienen und senkrecht zu den Längsschienen ausgerichteten Querschienen offenbart. Die Längsschienen sind mit einer Klemmvorrichtung versehen zur klemmenden Befestigung von rahmenlosen Dachmodulen an den Längsschienen.
Es ist eine Aufgabe der Erfindung, ein Dacheindeckungssystem anzugeben, mit dem Dachmodule einfach und sicher als eine Dacheindeckung montiert werden können.

Diese Aufgabe wird durch ein Dacheindeckungssystem der eingangs genannten Art gelöst, bei dem erfindungsgemäß die Längsschienen formschlüssig und in Querrichtung verschiebbar in die Querschienen eingehängt sind. Eine Rahmung der einzelnen Dachmodule kann entfallen und die Dachmodule können wie vom Hersteller geliefert direkt auf der Baustelle im Dach zusammengefügt und das Dach so gedeckt werden. Eine Montagevorbereitung in einem vorbereitenden Betrieb kann entfallen.

Ein Dachmodul kann ein PV-Modul oder ein thermisches Solarmodul zum Erwärmen von Flüssigkeit, ein Dachfenster oder ein beliebiges anderes das Dach eindeckendes Element sein. Die Ablaufrichtung verläuft zweckmäßigerweise von einem First zu einer Traufe, insbesondere senkrecht zu First und Traufe. Die Trägerschienen sind vorteilhafterweise Profilschienen, z.B. aus Metall, insbesondere aus Aluminium, wobei die Querschienen auch Latten sein können, beispielsweise aus Holz oder einem Kunststoff.

Die klemmende Verbindung erfolgt zweckmäßigerweise an zwei gegenüberliegenden Längsseiten eines Dachmoduls, insbesondere von allen Dachmodulen, wobei die anderen beiden Kantenseiten frei von der Klemmvorrichtung bleiben können, sodass sie dort nicht klemmend gehalten sind. Auch im betriebsbereit montierten Zustand sind die Dachmodule zweckmäßigerweise rahmenfrei und nur an zwei gegenüberliegenden Kantenseiten gehalten. Entlang der anderen Seiten können sie aufliegen oder anliegen. Zweckmäßigerweise sind die Dachmodule auch im montierten, insbesondere betriebsbereiten Zustand rahmenlos vom Dacheindeckungssystem gehalten.

Zweckmäßigerweise umfasst das Dacheindeckungssystem Querschienen, die senkrecht zu den Längsschienen ausgerichtet sind und mit diesen einen Kreuzschienenverbund bilden können.

In einer vorteilhaften Ausgestaltung der Erfindung weist die Klemmvorrichtung ein an einer Längsschiene befestigtes Klemmelement auf zur klemmenden Befestigung eines rahmenlosen Dachmoduls auf der Längsschiene. Das Klemmelement ist zweckmäßigerweise direkt mit der Längsschiene verbunden und kann eine Klemmleiste sein, die sich über die gesamte Länge eines Dachmoduls erstreckt. Ebenfalls möglich sind einzelne Klemmelemente, die z.B. in einem Abstand von zwischen 10 cm und 1 m zueinander stehen und nur einige Zentimeter lang sind. Ein rahmenloses Dachmodul kann an dem zu erstellenden Schrägdach auf eine Längsschiene aufgelegt und durch die Klemmleiste klemmend befestigt werden.

Vorteilhafterweise ist das Klemmelement mit der Längsschiene verschraubt. Alternativ oder zusätzlich ist eine formschlüssige Verkrallung des Klemmelements möglich, die einen guten Diebstahlschutz bieten kann. Das Klemmelement kann in die Längsschiene eingesteckt oder eingeschlagen werden und verkrallt sich in der Längsschiene, z.B. durch widerhakenförmige Elemente. Zweckmäßigerweise ist das Klemmelement in einer Gewindenut der Längsschiene verkrallt. Das Klemmelement kann einteilig oder zweiteilig sein, wobei die beiden Teile identisch ausgeführt sein können.

Ein in eine Ausnehmung einsteckbares Klemmelement, das sich selbständig in der Ausnehmung befestigt, z.B. durch widerhakende Krallen, eine Hinterrastung, eine reibschlüssige Verbindung oder dergleichen, ist vorteilhaft auch in einem anderen Element als der Längsschiene anwendbar. So kann das Klemmelement in anderen Erfindungsvarianten auch in ein anderes Element eines beliebigen Dacheindeckungssystems einsteckbar sein.

Durch die auf der Baustelle bzw. am zu montierenden Schrägdach zur Dacheindeckung zusammenzufügende Verbindung können Dachmodule unterschiedlicher Dicke zur Dacheindeckung verwendet werden. Auf diese Weise kann das gleiche Dacheindeckungssystem für mehrere unterschiedliche Schrägdächer verwendet werden, die mit unterschiedlich dicken Dachmodulen bestückt sind. Es ist auch möglich, an einem Schrägdach mit einem Dacheindeckungssystem unterschiedlich dicke Dachmodule zu verwenden. Höhendifferenzen können durch Dichtungen und/oder Unterlagen ausgeglichen werden.

Eine besonders einfache Montage ist ermöglicht, wenn die rahmenlosen Dachmodule in Querrichtung beidseitig von einer Dichtung eingefasst sind und die Dichtung unmittelbar zwischen Klemmleiste und Längsschiene eingeklemmt ist. Die Querrichtung verläuft parallel zu den Querschienen und kann die Richtung des Firsts sein. Die Dichtung kann einteilig oder mehrteilig sein, sodass beispielsweise ein Dichtungselement zwischen Klemmleiste und Dachmodul und ein weiteres zwischen Dachmodul und Längsschiene eingeklemmt ist.

Eine besonders einfache Verschraubung zwischen Klemmleiste und Längsschiene kann hergestellt werden, wenn die Längsschiene ein Gewindeprofil zum Einschrauben von Schrauben zum Halten der Klemmleiste aufweist.

Die Dachmodule sind durch die Klemmvorrichtung klemmend im Dacheindeckungssystem gehalten. Eine weitere Halterung gegen ein Abrutschen eines Dachmoduls nach unten kann durch einen Haltewinkel erzielt werden zum Abstützen eines Dachmoduls in Ablaufrichtung. Der Haltewinkel ist zweckmäßigerweise mit einer Längsschiene verbunden, insbesondere verschraubt.

Die Längsschienen sind formschlüssig in die Querschienen eingehängt. Der Formschluss wird zweckmäßigerweise durch ein Eingreifen eines Schienenbereichs in eine Ausnehmung der anderen Trägerschiene realisiert. Die Ausformung kann in der Querschiene oder in der Längsschiene eingebracht sein.

Die Längsschienen sind in Querrichtung verschiebbar in Querschienen eingehängt. Ein Querabstand zwischen den Längsschienen ist auf diese Weise einfach und im Wesentlichen beliebig einstellbar, sodass das Dacheindeckungssystem für unterschiedlich breite Dachmodule verwendbar ist. Die Verschiebbarkeit kann sich auf den Moment des Einhängens beziehen, wobei eine weitere Befestigung, beispielsweise eine Verschraubung von Längsschienen und Querschienen, eine höhere Stabilität ins Schrägdach bringen.

Hintergreifen die Längsschienen die Querschienen formschlüssig, so wird nicht nur die Montage erleichtert, sondern die auf den Längsschienen befestigten Dachmodule können auch gegen ein ungewolltes Abheben bei einem starken Wind gesichert werden. Der Hintergriff ist zweckmäßigerweise so ausgeführt, dass die Schwerkraft der Dachmodule einem Lösen des Hintergriffs entgegen wirken.

Zweckmäßigerweise sind Längsschienen und Querschienen formschlüssig miteinander verbunden, beispielsweise durch eine Verschraubung oder eine zumindest ähnlich wirkende Verbindung. Die Verschraubung kann mithilfe eines Nutsteins erfolgen, der von einer der Trägerschienen, beispielsweise der Querschiene hintergriffen wird.

In einer weiteren vorteilhaften Ausführungsform der Erfindung sind mehrere Längsschienen in Längsrichtung hintereinander geschuppt angeordnet, insbesondere entsprechend den Dachmodulen. Auf diese Weise kann eine Parallelität von geschuppten Dachmodulen und Längsschienen erreicht werden, was vorteilhaft für eine gute Abdichtung des Daches und eine einfache Montage ist. Die Längsschienen können hierbei etwas länger als ein Dachmodul ausgeführt sein, um einen guten Zusammenhalt zu gewähren, sind jedoch zweckmäßigerweise kürzer als die Länge von zwei Dachmodulen.

Zweckmäßigerweise ist eine Querreihe von Dachmodulen zwischen zwei Dachmodulen jeweils eine Längsschiene angeordnet, die nur diese beiden Dachmodule trägt. Darüber und darunter liegende Dachmodule werden jeweils von anderen Längsschienen getragen.

Durch einen Eingriff von zwei geschuppt zueinander angeordneten Längsschienen ineinander im Bereich ihrer Überlappung kann die Montage vereinfacht, die Verbindung von Längsschienen stabil und eine Maßgenauigkeit hoch gehalten werden. Das Ineinandergreifen kann durch einen oder mehrere Längsstege erfolgen, die jeweils in eine Längsnut der anderen Längsschiene eingreifen, insbesondere vertikal. Alternativ oder zusätzlich kann das Ineinandergreifen einen Formschluss bilden, der ein Abheben der oberen Längsschiene von der unteren blockiert. Auf ein Verschrauben der Längsschienen untereinander kann verzichtet werden.

Außerdem ist es vorteilhaft, wenn die Längsschienen jeweils zumindest eine Wasserablaufrinne aufweisen.

Die Längsschienen und Querschienen können unterschiedlich ausgestaltet sein, beispielsweise sind die Querschienen lattenförmig und die Längsschienen Aluminiumprofile. Eine hohe Stabilität und Einheitlichkeit und einfache Materialbeschaffung kann erreicht werden, wenn die Querschienen und Längsschienen das gleiche Profil aufweisen. Das Profil ist zweckmäßigerweise ein Querschnittsprofil. Hierbei wird außerdem vorgeschlagen, dass die Längsschienen relativ zu den Querschienen kopfüber angeordnet sind. Es kann eine einfache Befestigung der Schienen untereinander und der Längsschienen oder Querschienen auf einer Dachkonstruktion erreicht werden.

Im Falle eines Kabelbrands, beispielsweise bei einer Photovoltaikanlage, ist es vorteilhaft, wenn die brennenden Kabel von einem Holzelement der Dachkonstruktion abgeschirmt sind. Die Erfindung sieht zu diesem Punkt zweckmäßigerweise vor, dass die Querschienen wie auch die Längsschienen einen beidseitig nach unten verschlossenen Kabelkanal aufweisen. Der Verschluss wird zweckmäßigerweise durch die Schienen an sich gebildet. Einem Durchschlagen eines Brandherds auf eine Holzdachkonstruktion kann somit entgegengewirkt werden.

Um ein Eindrücken von Regen in das Dach zu vermeiden, kann zwischen zwei geschuppt zueinander angeordneten Dachmodulen eine quer verlaufende Dichtung im Bereich ihrer Überlappung angeordnet sein. Eine gute Hinterlüftung des Dachs kann erreicht werden, wenn das Dacheindeckungssystem ein Verlängerungselement zum Verlängern einer Überlappung zwischen zwei geschuppt zueinander angeordneten Dachmodulen aufweist. Ein solches Verlängerungselement kann beispielsweise auf ein Dachmodul aufgesteckt oder anders befestigt werden, sodass es ein Stück weit unter das darüber liegende Dachmodul reicht. Das untere Dachmodul wird auf diese Weise nach oben hin verlängert.

Die Erfindung wird anhand von Ausführungsbeispielen näher erläutert, die in den Zeichnungen dargestellt sind.

Es zeigen:
- FIG 1: einen Ausschnitt aus einem eingedeckten Dach mit sechs Dachmodulen und einen Ausschnitt eines Dacheindeckungssystems,
- FIG 2: einen Schnitt durch das Schrägdach entlang der Linie II-II,
- FIG 3: einen Schnitt durch das Dacheindeckungssystem entlang der Schnittlinie III-III,
- FIG 4: einen Querschnitt durch eine Längsschiene
- FIG 5: einen Querschnitt durch eine Längsschiene an einem Dachrand mit einem Universal- bzw. Ortgang-An-schlussblech und eine mit der Längsschiene verschraubte Klemmleiste,
- FIG 6: eine Seitenansicht auf eine Längsschiene mit Ausnehmungen zum Einhängen in eine Querschiene und zum Einfügen einer weiteren Längsschiene,
- FIG 7: eine schematische Darstellung eines Dachmoduls mit einem aufgesteckten Verlängerungselement,
- FIG 8: eine Einsteckleiste zur Verklemmung in einer Längsschiene und
- FIG 9: eine Einsteckleiste zur Verklemmung in einer Querschiene.

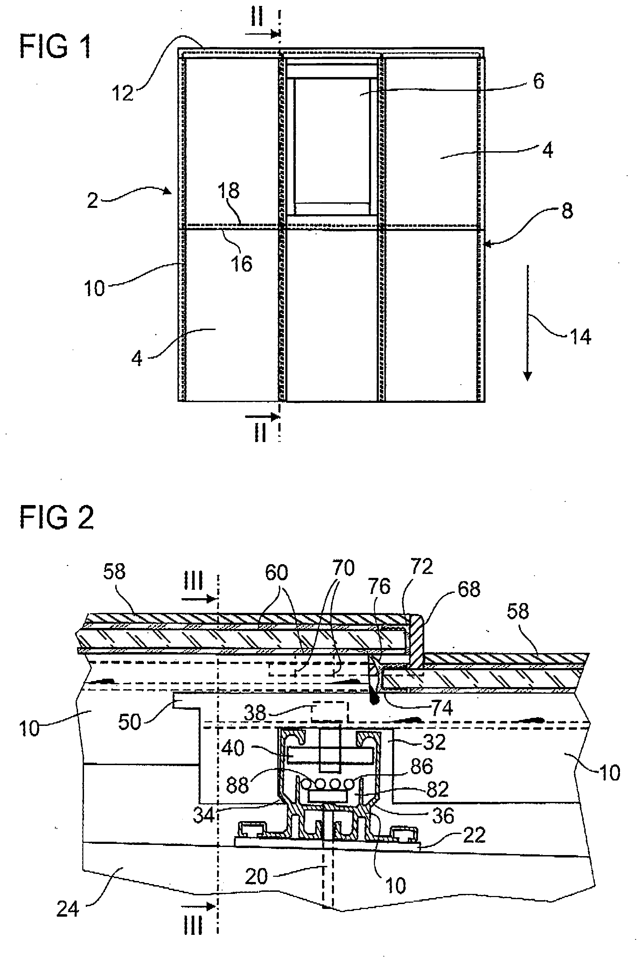

FIG 1 zeigt einen Ausschnitt aus einem Schrägdach 2, das mit einer Vielzahl von Dachmodulen 4, 6 abdichtend eingedeckt ist, von denen der Übersichtlichkeit halber nur sechs Dachmodule 4, 6 dargestellt sind. Das Dachmodul 6 ist ein Dachflächenfenster, das in FIG 1 von fünf Dachmodulen 4 umgeben ist, die als Photovoltaik-Modul (PV-Modul) ausgeführt sind. Die PV-Module 4 sind Glasmodule zur photovoltaischen Erzeugung von Strom.

Die Dachmodule 4, 6 sind getragen von einem Dacheindeckungssystem 8 mit einer Anzahl von Trägerschienen 10, 12, von denen die Trägerschienen 10 Längsschienen 10 sind und die Trägerschienen 12 senkrecht zu ihnen angeordnete Querschienen 12. Die Längsschienen 10 und Querschienen 12 bilden einen Kreuzschienenverbund, der parallel zu einem nicht dargestellten Dachfirst ausgerichtet ist, so dass mehrere Reihen von Dachmodulen 4, 6, von denen in FIG 1 nur zwei Reihen ä drei Dachmodule 4, 6 gezeigt sind, parallel zum Dachfirst des Schrägdachs 2 angeordnet sind. In dieser Richtung sind auch die Querschienen 12 angeordnet. Parallel zu einer Ablaufrichtung 14, die senkrecht zum Dachfirst und vom Dachfirst in Richtung einer Traufe, die nicht dargestellt ist, gerichtet ist, sind die Längsschienen 10 angeordnet.

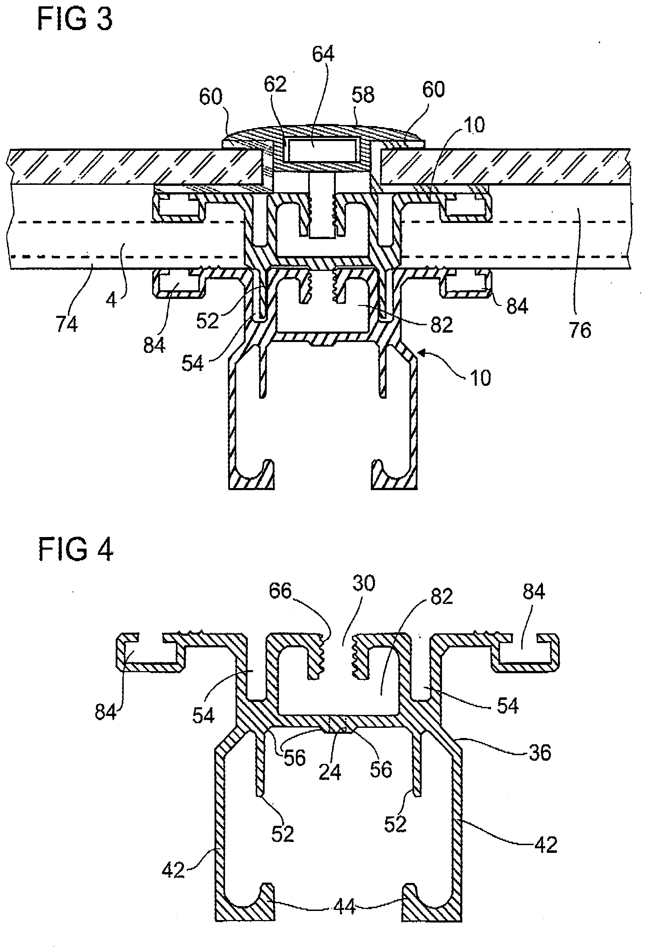

Die Dachmodule 4, 6 sind geschuppt angeordnet, sodass eine Unterkante 16 ein Stück weit einen oberen Bereich eines darunter liegenden Dachmoduls 6 überdeckt, sodass deren Oberkante 18 unter dem jeweils darüber angeordneten Dachmodul 4, 6 zu liegen kommt. Auf diese Weise sind die Dachmodule 4, 6 als das Schrägdach 2 abdichtende Elemente einer Dacheindeckung ausgeführt, analog wie Dachziegel oder Dachschindeln. FIG 2 zeigt einen Ausschnitt aus einem Schnitt durch das Schrägdach 2 entlang der Richtung II-II aus FIG 1. Zu sehen sind zwei Längsschienen 10 in einer Seitenansicht und eine Querschiene 12 in einer geschnittenen Ansicht. Die Querschiene 12, die in FIG 4 in einer vergrößerten Schnittdarstellung gezeichnet ist, ist mit Hilfe einer Schraube 20 über eine Zwischenplatte 22 direkt mit einem Dachsparren 24 verschraubt. Hierzu ist eine Anzahl von Löchern 26 (siehe FIG 4) in einem parallel zur Dachrichtung ausgerichteten Zwischensteg 28 eingebracht und in ihrer Position an die Position der Dachsparren 24 angepasst. Die Löcher 26 und der Durchmesser der Schrauben 20 ist hierbei so gewählt, dass die Schrauben 20 ohne zu greifen durch eine Gewindenut 30 geführt sind. Die Querschienen 12 erstrecken sich entlang einer Mehrzahl von Dachmodulen 4, 6 bzw. - je nach Länge der Profile der Querschienen 12 - über die gesamte Breite des Schrägdachs 2.

Formschlüssig mit der in FIG 2 gezeigten Querschiene 12 verbunden ist eine untere Längsschiene 10, die ein kleines Stück weit von ihrem oberen Ende beabstandet eine ausgefräste Ausnehmung 32 aufweist. Die untere Längsschiene 10 und die Querschiene 12 sind so ineinander eingehängt, dass ein Abrutschen der Längsschiene 10 in Ablaufrichtung 14 unterbunden wird.

Die Längsschienen 10, die in FIG 3 geschnitten dargestellt sind, haben dasselbe Querschnittsprofil wie die Querschiene 12. Die unter Längsschiene 10 ist kopfüber in die Querschiene 12 eingehängt. Es können somit für die Längsschienen 10 und Querschienen 12 die gleichen Profilschienen verwendet werden. Alternativ ist es möglich, als Querschienen 12 andere, insbesondere einfachere Profile zu verwenden, beispielsweise Dachlatten mit einem rechteckigen Querschnittsprofil oder andere stranggepreßte bzw. strangezogene Schienen aus Kunststoff oder Metall, insbesondere Aluminium.

Die Ausnehmung 32 ist so ausgeführt, dass sie eine Ausformung 34 aufweist, die einen Absatz der Querschiene 12 hintergreift. Durch diese formschlüssige Verbindung von Ausformung 34 und Absatz 36 wird ein Abheben der Längsschiene 10 nach oben weg, also in diesem Fall senkrecht zur Dachrichtung, verhindert, wodurch eine Montage erleichtert und eine gewisse Stabilität des Dacheindeckungssystems 8 erreicht wird. Dieser Schutz gegen Abheben wird dadurch verstärkt, dass die Längsschiene 10, der Schwerkraft folgend, nach unten gezogen wird, in FIG 2 nach rechts. Hierdurch wird die Ausformung 34 in den Absatz 36 hineingezogen, sodass einem Abheben der Längsschiene 10 von der Querschiene 12 entgegengewirkt wird.

Zusätzlich ist die Längsschiene 10 mit Hilfe einer Schraube 38 und einem Nutstein 40 mit Querschiene 12 verschraubt, wobei die Schraube 38 in den Nutstein 40 eingeschraubt ist und der Nutstein 40 von zwei Ausformungen 44 von jeweils einem Seitensteg 42 der Querschiene 12 umgriffen wird, sodass der Nutstein 40 formschlüssig innerhalb des Querschnittsprofils der Querschiene 12 gehalten ist.

Über der unteren Längsschiene 10 überlappend angeordnet ist eine obere Längsschiene 10, die parallel zur unteren Längsschiene 10 ausgerichtet ist und diese entgegen der Ablaufrichtung fortsetzt.

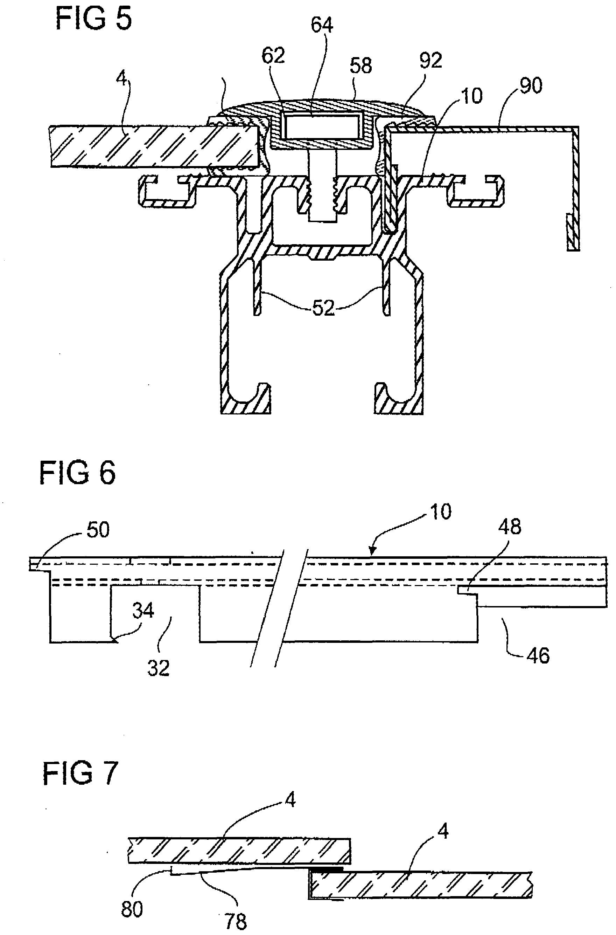

Die obere und die untere Längsschiene 10 sind in FIG 6 in einer Seitenansicht dargestellt, sodass Ausnehmungen 32, 46 sichtbar sind, zum formschlüssigen Verbund mit der Querschiene 12 bzw. mit der nach unten folgenden Längsschiene 10. Die Ausnehmung 46 ist ein Ende der Längsschiene 10 eingearbeitet, so dass diese Längsschiene 10 an diesem Ende in Längsrichtung der Längsschiene 10 auf eine darunter liegende Längsschiene 10 aufgesteckt werden kann. Auf diese Weise sind die Längsschienen 10 zweidimensional miteinander verbunden. Die Ausnehmung 46 am unteren Ende der Längsschiene 10 ist mit einer buchtförmigen weiteren Ausnehmung 48 versehen, in die eine Nase 50 der unteren Längsschiene 10 eingreift. Durch den hierdurch entstehenden Formschluss wird ein Abheben der oberen Längsschiene 10 von der unteren Längsschiene 10 nach oben senkrecht zur Dachrichtung verhindert. Die obere Längsschiene 10 kann bei der Montage auf die untere Längsschiene 10 aufgesteckt werden und ist somit fest im Verbund des Dacheindeckungssystems 2 angeordnet. Hierdurch wird eine einfache, zuverlässige und präzise Montage gefördert.

Aus FIG 3 ist außerdem zu sehen, dass zwei senkrechte Stege 52 der oberen Längsschiene 10 in Nuten 54 der unteren Längsschiene 10 eingreifen, sodass in Querrichtung, also parallel zur Querschiene 12, ebenfalls ein Formschluss erreicht wird, der ein Verschieben der oberen Längsschiene 10 quer zur unteren Längsschiene 10 verhindert. Auf diese Weise ist die obere Längsschiene 10 zweidimensional mit der unteren Längsschiene 10 befestigt, sodass nur ein Herausziehen der oberen Längsschiene 10 in Richtung zum First von der unteren Längsschiene 10 möglich ist.

Außerdem ist das Querprofil der Längsschienen 10 mit einer Anzahl von Schrägen 56 versehen, die selbstzentrierend in die Gewindenut 30 und die Nut 54 eingreifen. Auf diese Weise wird ein präziser und stabiler Verbund zwischen den beiden überlappenden Längsschienen 10 erreicht.

Auf die Längsschienen 10 sind die Dachmodule 4, 6 jeweils aufgelegt, wie aus den Schnitten aus FIG 2 und FIG 3 zu sehen ist. Die dargestellten Dachmodule 4 sind PV-Module, die eine Glasscheibe und eine rückseitige und beispielsweise in Harz vergossene PV-Schicht aufweisen. Mittels einer Klemmvorrichtung mit einer Klemmleiste 58 und einer Dichtung 60, die auf die seitlichen Kantenseiten der Module 4, 6 aufgesteckt ist, sind die Module 4, 6 an den jeweiligen Längsschienen 10 befestigt. Die rahmenlosen Dachmodule 4, 6 sind so auf quer verschieblich in die Querschienen 12 eingehängten Längsschienen 10 geklemmt. Die Klemmleiste 58 ist in regelmäßigen Abständen mit von oben zugänglichen Ausnehmungen 62 versehen, in die jeweils eine Schraube 64 eingesteckt werden kann, die in ein Gewinde 66 der Gewindenut 30 eingeschraubt wird. Auf diese Weise ist die Klemmleiste 58 mit der entsprechenden Längsschiene 10 verschraubt. Über das Anziehen der Schrauben 54 kann eine Klemmkraft über die Dichtungen 60 auf die Dachmodule 4, 6 ausgeübt werden, durch die die Dachmodule 4, 6 stabil und gegen ein Verrutschen und Abheben sicher mit der Längsschiene 10 und damit dem Dacheinsteckungssystem 8 verbunden sind.

Anstelle einer durchgehenden Klemmleiste 58 sind kürzere Klemmelemente möglich, z.B. zwei jeweils 5 cm lange Elemente pro Dachmodul 4, die beispielsweise das Profil der durchgehenden Klemmleiste 58 aufweisen.

Mit dem gezeigten Dacheindeckungssystem 8 können rahmenlose Dachmodule 4, 6 zur Dacheindeckung des Schrägdachs 2 verwendet werden. Sie können ohne Rahmen und direkt wie vom Hersteller geliefert auf der Baustelle in das Dacheindeckungssystem montiert werden, so dass sie auch im montierten bzw. betriebsbereiten Zustand rahmenlos sind.

Das Dacheindeckungssystem 8 ist außerdem für jegliche Größe von Dachmodulen 4, 6 verwendbar, wobei die Abstände der Längsschienen 10 und Querschienen 12 zueinander entsprechend an die Maße der Dachmodule 4, 6 angepasst werden. Durch die Verschiebbarkeit der Längsschienen 10 auf den Querschienen 12 - vor einem festen Verschrauben durch die Schrauben 38 - kann das Dacheindeckungssystem 8 mit seinen Trägerschienen 10, 12 an jede Breite eines Dachmoduls 4, 6 angepasst werden. Eine Anpassung an die Länge der Dachmodule 4, 6 wird durch eine entsprechende Montage der unteren Querschienen 12 auf dem Dachsparren 24 erreicht.

Anstelle der PV-Module 4 können auch Dachflächenfenster 6, Thermosolarmodule oder beliebige andere Module verwendet werden, die auch in einem einzigen Dacheindeckungssystem auf einem einzigen Schrägdach 2 beliebig miteinander kombinierbar sind. Eine Anpassung an die Dicke der entsprechenden Dachmodule 4, 6 wird durch eine entsprechende Anpassung der Bemaßungen der Dichtung 60 erreicht. Durch die Klemmung mit den Schrauben 64 und damit den variablen Abstand zwischen der Klemmleiste 58 und der entsprechenden Längsschiene 10 können sehr dünne Dachmodule 4, 6, wie in FIG 3 gezeigt, oder dicke Dachmodule 4, 6 wie in FIG 5 gezeigt verwendet werden. Auch innerhalb eines Schrägdachs 2 sind verschieden dicke Dachmodule 4, 6 beliebig miteinander kombinierbar.

Durch die geschuppte Anordnung der Längsschienen 10 ist die Verschuppung der Dachmodule 4, 6 in das Dacheindeckungssystem 8 übertragen. Da ein Dachmodul 4, 6 beidseitig von jeweils zwei Längsschienen 10 gehalten ist, die in ihrer Länge die Dachmodule 4, 6 maximal ein kleines Stück überragen, beispielsweise nicht mehr als 20 %, insbesondere 10 % einer langen Ausdehnung eines Dachmoduls 4, 6, wird eine Trennung der Längsschienen 10 von einer Reihe Dachmodule 4, 6 zur nächsten darunter- oder darüberliegenden Reihe Dachmodule 4, 6 erreicht. Jede Reihe Dachmodule 4, 6 ist mit jeweils eigenen Längsschienen 10 versehen. Hierdurch wird die Überschuppung in das Dacheindeckungssystem 8 übertragen, sodass die Längsschienen nicht parallel zum Schrägdach 2 sondern parallel zu jeweils den Dachmodulen 4, 6 ausgerichtet sind.

Um bei einer starken mechanischen Beanspruchung des Dachs ein Heraus- bzw. Herunterrutschen eines Dachmoduls 4, 6 aus den Dichtungen 60 zu vermeiden, ist am jeweils unteren Ende der Längsschienen 10 ein Haltewinkel 68 befestigt, der ein Dachmodul 4, 6 jeweils von unten übergreift. Der Haltewinkel 68 ist in das Querprofil der oberen Längsschiene 10 entgegen der Ablaufrichtung eingesteckt und mit der Längsschiene 10 mit Hilfe von zwei nur symbolisch dargestellten Schrauben 70 verschraubt. Zwischen dem Haltewinkel 68 und der unteren Kante des Dachmoduls 4, 6 kann eine weitere Dichtung 72 als Puffer zum Schonen des Dachmoduls 4, 6 eingefügt werden.

Eine weitere Funktion einer Längsschiene 10 ist in FIG 5 dargestellt. Die Längsschiene 10 bildet einen äußeren Abschluss des Dacheindeckungssystems 8 und ist an einem Rand des Schrägdachs 2 angeordnet. Nur auf einer Seite ist sie mit einem Dachmodul 4 verklemmt, das ein äußeres Dachmodul 4 bildet. Auf seiner dem Dachmodul 4 entgegengesetzten Seite ist ein Ortgang-Anschlussblech 90 an der Längsschiene 10 befestigt. Es ist in die Nut 54 eingeschoben und wird von dieser in Position gehalten. Zur zusätzlichen Stabilisierung ist es über eine Dichtung 92 von der Klemmleiste in die Nut 54 klemmend eingedrückt.

Um zu verhindern, dass Regen von unten zwischen die überlappenden Dachmodule 4, 6 einbläst, stehen mehrere Möglichkeiten zur Verfügung. Eine Möglichkeit ist, eine Dichtung 74 zwischen die beiden überschuppenden Dachmodule 4, 6 im Überlappungsbereich anzubringen. Diese Dichtung 74 kann auf die Oberkante, also die zum First gerichtete Seite des unteren Dachmoduls 4, 6, aufgesteckt werden und trägt zweckmäßigerweise eine Lippe 76 zur Anlage an dem darüber liegenden Dachmodul 4, 6.

Eine weitere Möglichkeit der Abdichtung ist in FIG 7 dargestellt. FIG 7 zeigt nur die zwei Dachmodule 4 im Bereich ihrer Überlappung. Auf das untere Dachmodul 4 ist ein Verlängerungselement 78, beispielsweise als ein gekantetes Blech aufgesteckt, sodass das untere Dachmodul um beispielsweise 20 cm nach oben verlängert wird und hierdurch auch die Überlappung zwischen den Dachmodulen 4. Durch die verlängerte Überlappung wird einem Einblasen von Regen in das gedeckte Schrägdach 2 entgegengewirkt. Durch eine nach oben gerichtete Abkantung 80 wird eine zusätzliche Sicherheit erreicht.

Die Längsschienen 10 sind mit mehreren Kanälen 82, 84 (FIG 2 und FIG 3) versehen. Die Kanäle 82 sind besonders geeignet für das Verlegen von elektrischen Kabeln 86, die somit nach unten und zur Seite abgeschirmt sind, sodass bei einem Kabelbrand keine Flammen auf die darunterliegende Dachkonstruktion durchschlagen können. Auch nach oben ist durch die verhältnismäßig geringe Öffnung eine gute Abschirmung erreicht. Mithilfe der Überlappung der Längsschienen 10 ist dieser Kanal 82 auch im Bereich der Überlappung fugenfrei nach unten abgeschirmt, wodurch eine hohe Sicherheit erreicht wird.

Wie aus FIG 2 ersichtlich ist, umfassen auch die Querschienen 12 einen zum Führen der Kabel 86 geeigneten Kanal 88, der nach unten, also zur Dachkonstruktion hin, verschlossen ist, sowie auch zu beiden Seiten, sodass auch in diesem Kanal 88 eine hohe Sicherheit vor einem Durchschlagen eines Kabelbrands zur Dachkonstruktion erreicht wird.

Im Kanal 82 und auch in den Kanälen 84 kann außerdem Kondenswasser abgeführt werden, wie in FIG 2 durch Tropfen angedeutet ist. Auf diese Weise wird das Kondenswasser von oben nach unten bzw. vom First bis zur Traufe durch das Dacheindeckungssystem 8 getragen und unterbrechungsfrei abgeführt, so dass es sich nicht in der Konstruktion des Schrägdachs 2 sammelt.

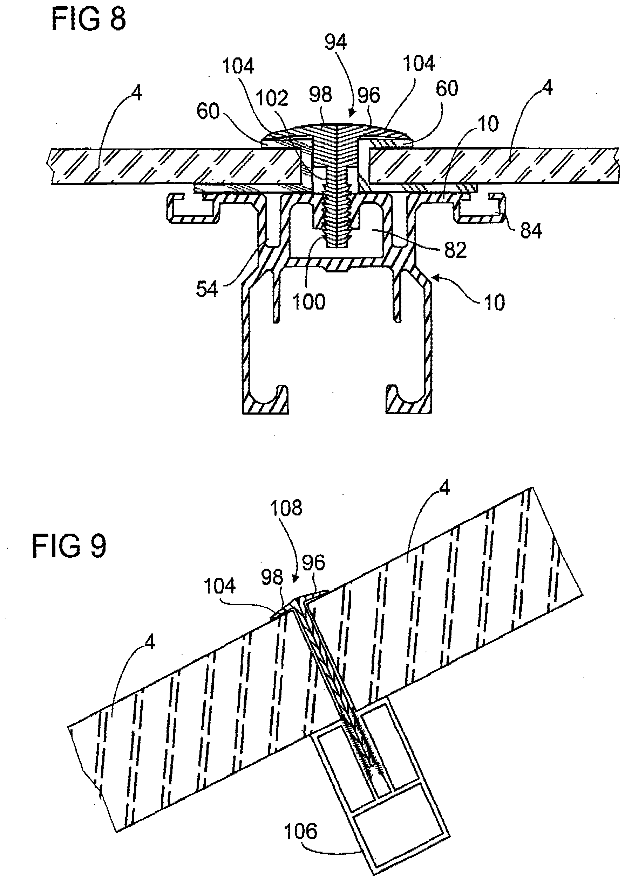

Eine alternative Klemmleiste 94 ist in FIG 8 dargestellt. Sie ist zweiteilig ausgeführt mit einer Hauptklemme 96 und einer Gegenklemme 98, die identisch wie die Hauptklemme 96 ausgeführt sein kann und spiegelverkehrt eingesetzt wird. Die Hauptklemme 96 und die Gegenklemme 98 sind mit widerhakenähnlichen Krallen 100 an einer Feder 102 versehen, die sich im Gewinde 66 der Längsschiene 10 verkrallen.

Die Federn 102 können in alternativen Ausführungen in eine Nut eines Elements eines Dacheindeckungssystems eingeführt werden, z.B. in eine Querschiene 106, wie in FIG 9 anhand einer Klemmleiste 108 gezeigt ist, oder eine andere Lattung, so dass eine Nut-Feder-Verbindung entsteht.

Zur Montage wird eine der Klemmen 96 in die Längsschiene 10 eingelegt. Diese zuerst eingelegte Klemme 96 wird als Hauptklemme bezeichnet. Das Dachmodul 4, 6 wird auf die Modulschiene angelegt und ausgerichtet. Die Hauptklemme 96 dient dabei als Abrutschhalterung, insbesondere, wenn die Klemmleiste 94 in eine Querschiene 12 oder eine andere Querschiene 106 eingesteckt wird. In diesem Fall wird zuerst das untere Dachmodul 4, 6 auf die Querschiene 106 aufgelegt, dann die Hauptklemme 96, die dieses Dachmodul 4, 6 umgreift. Dann wird das gegenüber liegende Dachmodul 4, 6, auf die Längsschiene 10 bzw. die Querschiene 106 aufgelegt und die Gegenklemme 98 in den verbleibenden Spalt der Längsschiene 10 bzw. der Querschiene 106 eingesteckt. Die Gegenklemme 98 kann mit einem Hammer eingeschlagen werden, so dass ein fester Halt der beiden Dachmodule 4, 6 entsteht.

Die Hauptklemme 96 verzahnt sich dabei in dem Profil der Längsschiene 10 bzw. der Querschiene 106. Beim Einschlagen der Gegenklemme 98 kann z.B. die dünne Seitenwand der Alu-Längsschiene 10 bzw. der Querschiene 106 im Bereich der Zähne etwas zurückfedern, und die Gegenklemme 98 wird bis zum festen Sitz der Module 4, 6 eingetrieben und presst gleichzeitig die Hauptklemme 96 in das Profil, z.B. das Gewinde 66. Die Festigkeit der Verbindung kann durch die Breite und Straffheit der Feder 102 mit ihren Krallen 100 eingestellt werden, so dass ein Lösen der Verbindung nur durch zerstören der Klemmleiste 94 möglich sein kann.

Der Abstand der Zähne der Krallen 100 bewirkt eine nachteilige Rasterung für die Verklemmung der Module 4, 6 auf der Längsschiene 10 bzw. der Querschiene 106. Um diesen Nachteil auszugleichen werden die Haltenasen 104 der Hauptklemme 96 und Gegenklemme 98 federnd ausgebildet und/oder es wird ein federnder Gummi 60 zwischen Klemmleiste 94 und Modul 4, 6 angebracht, welcher in etwa die Federweite der Zahnabstände aufweisen sollte.

Die Klemmleiste 94, 108 bildet eine diebstahlsichere Befestigung der Dachmodule 4, 6. Eine solche Einschlagklemme ist deutlich günstiger in der Herstellung als übliche diebstahlsichere Befestigungen von PV-Modulen 4. Die Einschlagtechnik beschleunigt die Montage wesentlich.

### Bezugszeichenliste

- 2: Schrägdach
- 4: Dachmodul
- 6: Dachmodul
- 8: Dacheindeckungssystem
- 10: Längsschiene
- 12: Querschiene
- 14: Ablaufrichtung
- 16: Unterkante
- 18: Oberkante
- 20: Schraube
- 22: Zwischenplatte
- 24: Dachsparren
- 26: Loch
- 28: Zwischensteg
- 30: Gewindenut
- 32: Ausnehmung
- 34: Ausformung
- 36: Absatz
- 38: Schraube
- 40: Nutstein
- 42: Seitensteg
- 44: Ausformung
- 46: Ausnehmung
- 48: Ausnehmung
- 50: Nase
- 52: Steg
- 54: Nut
- 56: Schräge
- 57: Klemmvorrichtung
- 58: Klemmleiste
- 60: Dichtung
- 62: Ausnehmung
- 64: Schraube
- 66: Gewinde
- 68: Haltewinkel
- 70: Schraube
- 72: Dichtung
- 74: Dichtung
- 76: Lippe
- 78: Verlängerungselement
- 80: Abkantung
- 82: Kanal
- 84: Kanal
- 86: Kabel
- 88: Kanal
- 90: Ortgang-Anschlussblech
- 92: Dichtung
- 94: Klemmleiste
- 96: Hauptklemme
- 98: Gegenklemme
- 100: Kralle
- 102: Feder
- 104: Haltenase
- 106: Querschiene
- 108: Klemmleiste

## Patentansprüche

1. Dacheindeckungssystem (8) zur Befestigung von auf einem Schrägdach (2) geschuppt angeordneten und als Dacheindeckung dienenden Dachmodulen (4, 6), mit einer Anzahl von in Ablaufrichtung (14) ausgerichteten Längsschienen (10), einer Klemmvorrichtung (57) zur klemmenden Befestigung von rahmenlosen Dachmodulen (4, 6) auf den Längsschienen (10) und senkrecht zu den Längsschienen (10) ausgerichteten Querschienen (12), **dadurch gekennzeichnet, dass** die Längsschienen (10) formschlüssig und in Querrichtung verschiebbar in die Querschienen (12) eingehängt sind.

2. Dacheindeckungssystem (8) nach Anspruch 1,
**dadurch gekennzeichnet, dass** die Klemmvorrichtung (57) ein an einer Längsschiene (10) befestigtes Klemmelement aufweist zur klemmenden Befestigung eines rahmenlosen Dachmoduls (4, 6) auf der Längsschiene (10).

3. Dacheindeckungssystem (8) nach Anspruch 2,
**dadurch gekennzeichnet, dass** das Klemmelement eine mit der Längsschiene (10) verschraubte Klemmleiste (58) ist.

4. Dacheindeckungssystem (8) nach Anspruch 2,
**dadurch gekennzeichnet, dass** das Klemmelement in eine Längsschiene (10) eingesteckt und darin verkrallt ist.

5. Dacheindeckungssystem (8) nach einem der Ansprüche 2 bis 4,
**dadurch gekennzeichnet, dass** die rahmenlosen Dachmodule (4, 6) in Querrichtung beidseitig von einer Dichtung (60) eingefasst sind und die Dichtung (60) unmittelbar zwischen Klemmelement und Längsschiene (10) eingeklemmt ist.

6. Dacheindeckungssystem (8) nach einem der vorhergehenden Ansprüche,
**gekennzeichnet durch** senkrecht zu den Längsschienen (10) ausgerichtete Querschienen (12), wobei die Längsschienen (10) die Querschienen (12) formschlüssig hintergreifen.

7. Dacheindeckungssystem (8) nach einem der vorhergehenden Ansprüche,
**dadurch gekennzeichnet, dass** in einer Querreihe von Dachmodulen (4, 6) zwischen zwei Dachmodulen (4, 6) jeweils eine Längsschiene (10) angeordnet ist, die nur diese beiden Dachmodule (4, 6) trägt.

8. Dacheindeckungssystem (8) nach einem der vorhergehenden Ansprüche,
**dadurch gekennzeichnet, dass** mehrere Längsschienen (10) in Längsrichtung hintereinander und entsprechend den Dachmodulen (4, 6) geschuppt angeordnet sind.

9. Dacheindeckungssystem (8) nach Anspruch 8,
**dadurch gekennzeichnet, dass** zwei geschuppt zueinander angeordnete Längsschienen (10) im Bereich ihrer Überlappung ineinander greifen.

10. Dacheindeckungssystem (8) nach Anspruch 9,
**dadurch gekennzeichnet, dass** durch das Ineinandergreifen ein Formschluss gebildet ist, der ein Abheben der oberen Längsschiene (10) von der unteren blockiert.

11. Dacheindeckungssystem (8) nach einem der vorhergehenden Ansprüche,
**gekennzeichnet durch** senkrecht zu den Längsschienen (10) ausgerichtete Querschienen (12), wobei die Querschienen (12) und Längsschienen (10) das gleiche Profil aufweisen.

12. Dacheindeckungssystem (8) nach Anspruch 11,
**dadurch gekennzeichnet, dass** die Längsschienen (10) relativ zu den Querschienen (12) kopfüber angeordnet sind.

13. Dacheindeckungssystem (8) nach einem der vorhergehenden Ansprüche,
**gekennzeichnet durch** senkrecht zu den Längsschienen (10) ausgerichtete Querschienen (12), wobei die Querschienen (12) einen beidseitig und nach unten verschlossenen Kabelkanal (82) aufweisen.

## Claims

1. Roof-covering system (8) for fastening roof modules (4, 6) which are arranged in imbricated formation on a pitched roof (2) and serve as a roof covering, having a number of longitudinal rails (10), which are oriented in the drainage direction (14), having a clamping device (57) for fastening frameless roof modules (4, 6) on the longitudinal rails (10) with clamping action, and having transverse rails (12), which are oriented perpendicularly to the longitudinal rails (10),
**characterized in that** the longitudinal rails (10) are fitted in the transverse rails (12) in a form-fitting manner and such that they can be displaced in the transverse direction.

2. Roof-covering system (8) according to Claim 1, **characterized in that** the clamping device (57) has a clamping element fastened on a longitudinal rail (10), in order to fasten a frameless module (4, 6) on the longitudinal rail (10) with clamping action.

3. Roof-covering system (8) according to Claim 2, **characterized in that** the clamping element is a clamping bar (58), which is screwed to the longitudinal rail (10).

4. Roof-covering system (8) according to Claim 2, **characterized in that** the clamping element is inserted into a longitudinal rail (10) and engaged therein.

5. Roof-covering system (8) according to one of Claims 2 to 4,
**characterized in that** the frameless roof modules (4, 6) are surrounded by a seal (60) on either side, as seen in the transverse direction, and the seal (60) is clamped in directly between the clamping element and longitudinal rail (10).

6. Roof-covering system (8) according to one of the preceding claims,
**characterized by** transverse rails (12), which are oriented perpendicularly to the longitudinal rails (10), wherein the longitudinal rails (10) engage behind the transverse rails (12) in a form-fitting manner.

7. Roof-covering system (8) according to one of the preceding claims,
**characterized in that**, in a transverse row of roof modules (4, 6), in each case one longitudinal rail (10) is arranged between two roof modules (4, 6) and carries only these two roof modules (4, 6).

8. Roof-covering system (8) according to one of the preceding claims,
**characterized in that** a plurality of longitudinal rails (10) are arranged in imbricated formation one behind the other in the longitudinal direction and in a manner corresponding to the roof modules (4, 6).

9. Roof-covering system (8) according to Claim 8,
**characterized in that** two imbricated longitudinal rails (10) engage one inside the other in the region where they overlap.

10. Roof-covering system (8) according to Claim 9,
**characterized in that** the interengagement forms a form fit which blocks the upper longitudinal rail (10) from being raised up from the lower one.

11. Roof-covering system (8) according to one of the preceding claims,
**characterized by** transverse rails (12), which are oriented perpendicularly to the longitudinal rails (10), wherein the transverse rails (12) and the longitudinal rails (10) have the same profile.

12. Roof-covering system (8) according to Claim 11,
**characterized in that** the longitudinal rails (10) are arranged in upended fashion relative to the transverse rails (12).

13. Roof-covering system (8) according to one of the preceding claims,
**characterized by** transverse rails (12), which are oriented perpendicularly to the longitudinal rails (10), wherein the transverse rails (12) have a cable channel (82) which is closed on either side and in the downward direction.

## Revendications

1. Système de couverture de toit (8) pour la fixation de modules de toit (4, 6) disposés en écailles sur un toit en pente (2) et servant de couverture de toit, comprenant une pluralité de rails longitudinaux (10) orientés dans la direction d'écoulement (14), un dispositif de serrage (57) pour fixer par serrage des modules de toit sans cadre (4, 6) sur les rails longitudinaux (10) et sur des rails transversaux (12) orientés perpendiculairement aux rails longitudinaux (10), **caractérisé en ce que** les rails longitudinaux (10) sont accrochés dans les rails transversaux (12) par engagement par correspondance de formes et de manière déplaçable dans la direction transversale.

2. Système de couverture de toit (8) selon la revendication 1,
**caractérisé en ce que** le dispositif de serrage (57) présente un élément de serrage fixé à un rail longitudinal (10) pour la fixation par serrage d'un module de toit sans cadre (4, 6) sur le rail longitudinal (10).

3. Système de couverture de toit (8) selon la revendication 2,
**caractérisé en ce que** l'élément de serrage est une baguette de serrage (58) vissée au rail longitudinal (10).

4. Système de couverture de toit (8) selon la revendication 2,
**caractérisé en ce que** l'élément de serrage est enfiché dans un rail longitudinal (10) et est ancré dans celui-ci.

5. Système de couverture de toit (8) selon l'une quelconque des revendications 2 à 4,
**caractérisé en ce que** les modules de toit sans cadre (4, 6) sont entourés des deux côtés dans la direction transversale par un joint d'étanchéité (60) et le joint d'étanchéité (60) est serré directement entre l'élément de serrage et le rail longitudinal (10).

6. Système de couverture de toit (8) selon l'une quelconque des revendications précédentes,
**caractérisé par** des rails transversaux (12) orientés perpendiculairement aux rails longitudinaux (10), les rails longitudinaux (10) venant en prise par l'arrière par engagement par correspondance de formes avec les rails transversaux (12).

7. Système de couverture de toit (8) selon l'une quelconque des revendications précédentes,
**caractérisé en ce qu'**un rail longitudinal (10) est à chaque fois disposé entre deux modules de toit (4, 6) dans une rangée transversale de modules de toi (4, 6), le rail longitudinal ne portant que ces deux modules de toit (4, 6).

8. Système de couverture de toit (8) selon l'une quelconque des revendications précédentes,
**caractérisé en ce que** plusieurs rails longitudinaux (10) sont disposés les uns derrière les autres dans la direction longitudinale et sont disposés en écailles de manière correspondant aux modules de toit (4, 6).

9. Système de couverture de toit (8) selon la revendication 8,
**caractérisé en ce que** deux rails longitudinaux (10) disposés en écailles l'un par rapport à l'autre viennent en prise l'un dans l'autre dans la région de leur chevauchement.

10. Système de couverture de toit (8) selon la revendication 9,
**caractérisé en ce qu'**un engagement par correspondance de formes est réalisé par l'engagement l'un dans l'autre, lequel engagement par correspondance de formes bloque un soulèvement du rail longitudinal supérieur (10) du rail inférieur.

11. Système de couverture de toit (8) selon l'une quelconque des revendications précédentes,
**caractérisé par** des rails transversaux (12) orientés perpendiculairement aux rails longitudinaux (10), les rails transversaux (12) et les rails longitudinaux (10) présentant le même profil.

12. Système de couverture de toit (8) selon la revendication 11,
**caractérisé en ce que** les rails longitudinaux (10) sont disposés tête en bas par rapport aux rails transversaux (12).

13. Système de couverture de toit (8) selon l'une quelconque des revendications précédentes,
**caractérisé par** des rails transversaux (12) orientés perpendiculairement aux rails longitudinaux (10), les rails transversaux (12) présentant un conduit de câble (82) fermé des deux côtés et vers le bas.
